**Europäisches Patentamt**

**European Patent Office**

**Office européen des brevets**

(19)

(11) Veröffentlichungsnummer : **0 452 540 B1**

# (12) EUROPÄISCHE PATENTSCHRIFT

(45) Veröffentlichungstag der Patentschrift :
**15.12.93 Patentblatt 93/50**

(51) Int. Cl.$^5$ : **C09J 133/00**

(21) Anmeldenummer : **90119713.7**

(22) Anmeldetag : **15.10.90**

(54) **Klebstoff zum Verbinden von Formteilen aus Polycarbonat-Kunststoffen.**

(30) Priorität : **21.04.90 DE 4012720**

(43) Veröffentlichungstag der Anmeldung :
**23.10.91 Patentblatt 91/43**

(45) Bekanntmachung des Hinweises auf die
Patenterteilung :
**15.12.93 Patentblatt 93/50**

(84) Benannte Vertragsstaaten :
**DE FR GB**

(56) Entgegenhaltungen :
**DE-A- 2 202 040**
**DE-A- 3 310 904**
**DE-A- 3 632 868**
**FR-A- 2 107 767**

(73) Patentinhaber : **Heraeus Kulzer GmbH**
**Heraeusstr. 12 - 14**
**D-63450 Hanau (DE)**

(72) Erfinder : **Eppinger, Bernhard**
**Am Kirmesplatz 17**
**W-6290 Weilburg (DE)**
Erfinder : **Krahmer, Melanie**
**Spessartstrasse 6**
**W-6393 Wehrheim/Ts. (DE)**

(74) Vertreter : **Kühn, Hans-Christian**
**Heraeus Holding GmbH, Stabsstelle**
**Schutzrechte, Heraeusstrasse 12-14**
**D-63450 Hanau (DE)**

EP 0 452 540 B1

## Beschreibung

Die Erfindung betrifft einen Klebstoff zum Verbinden von Formteilen aus Polycarbonat-Kunststoffen miteinander.

DE-A-2 202 040 betrifft eine anaerobe Klebstoffmasse aus dem Acrylsäureester eines alkoxylierten Bisphenol A-Derivats oder ähnlicher Verbindungen, vorzugsweise dem Dimethacrylat von propoxyliertem Bisphenol A, einem Hydroperoxid als Katalysator für die Polymerisation und gegebenenfalls einem Amin als Polymerisationsbeschleuniger. Diese Klebstoffmasse wird insbesondere zum Befestigen von Gegenmuttern, Stiftschrauben und anderen Befestigungseinrichtungen verwendet und härtet zwischen Metalloberflächen schnell aus.

In DE-A-3 310 904 werden Reaktivklebstoffe beschrieben, die 2,6-Bismethylenpimelinsäurediester und gegebenenfalls Methacrylsäureester als Monomere, Peroxid-Härter, Amin-Beschleuniger und, wenn erforderlich, polymere Verdickungsmittel, wie zum Beispiel Polymethylmethacrylat, enthalten. Diese Klebstoffe werden zur Herstellung hochbelastbarer Klebeverbindungen zwischen Metallblechen eingesetzt und finden Verwendung im Fahrzeug-, Flugzeug-, Apparate- und Möbelbau.

Obwohl eine Vielzahl von Klebstoffen der unterschiedlichsten Art für sehr viele Werkstoffe bekannt ist - die vorstehend genannten stellen Beispiele für Polymerisationsklebstoffe dar -, können Klebverbindungen in der Praxis nicht immer alle an sie gestellten Anforderungen in befriedigender Weise erfüllen. So ist es bisher nicht möglich, zwischen Formteilen aus Polycarbonat-Kunststoffen Klebverbindungen herzustellen, die eine gute Festigkeit auch bei Beanspruchung durch wechselnde Temperaturen besitzen und gegenüber Wasser und Treibstoffen dicht und beständig sind.

Es ist daher die Aufgabe der Erfindung, einen Klebstoff zum Verbinden von Formteilen aus Polycarbonat-Kunststoffen miteinander zu finden, mit dem sich Klebverbindungen, die in dem Temperaturbereich von etwa -35°C bis etwa +85°C fest und gegenüber Wasser und Treibstoffen dicht und beständig sind, herstellen lassen. Der Klebstoff soll außerdem keine Lösungsmittel enthalten, lagerbeständig sein und bei Raumtemperatur verarbeitet werden können.

Der die Lösung der Aufgabe darstellende Klebstoff ist erfindungsgemäß dadurch gekennzeichnet, daß er ein kalthärtender zweikomponentiger Polymerisationsklebstoff ist und jede Komponente 25 - 35 Gewichts-% Methylmethacrylat, 10 - 25 Gewichts-% 2,2-Bis-[4-(2-methacryloyloxyäthoxyphenyl)]-propan und 40 - 50 Gewichts-% Polymethylmethacrylat und die erste Komponente zusätzlich 2 - 3 Gewichts-% Dibenzoylperoxid und die zweite Komponente zusätzlich 2 - 3 Gewichts-% N,N-Dimethyl-p-toluidin enthält.

Das Polymethylmethacrylat kann bei der Zubereitung der Klebstoff-Komponenten als solches, vorzugsweise in Form von Polymerisat-Perlen mit einer Teilchengröße von 10 bis 150 Mikrometer, oder als Lösung in Methylmethacrylat eingesetzt werden.

Das auf beide Klebstoff-Komponenten verteilte Katalysator-System aus Dibenzoylperoxid und N,N-Dimethyl-p-toluidin ist an sich bekannt und gehört zu den für die Kaltpolymerisation von Methacrylsäureestern häufig benutzten Redox-Systemen.

Die beiden Komponenten des erfindungsgemäßen Klebstoffs sind lagerfähige Flüssigkeiten, die erst unmittelbar vor Gebrauch miteinander vermischt werden. Aufgrund ihres flüssigen Zustandes lassen sich die Komponenten - anders als die Komponenten der Pulver/Flüssigkeits-Systeme - sowohl manuell als auch maschinell sehr genau dosieren und vollständig miteinander vermischen.

Nach dem Auftragen auf die miteinander zu verbindenden Polycarbonat-Formteile und deren Zusammenfügen härtet der Klebstoff bei Raumtemperatur aus. Durch eine Wärme- oder Druckbehandlung der durch den Klebstoff zunächst fixierten Formteile kann die für die Härtung benötigte Zeit verkürzt werden.

Die mit dem erfindungsgemäßen Klebstoff zwischen Formteilen aus Polycarbonat, glasfaserverstärktem Polycarbonat und/oder kohlefaserverstärktem Polycarbonat hergestellten Klebverbindungen zeichnen sich durch ihre hohe Festigkeit und ihre Beständigkeit gegenüber Temperaturwechsel-Belastung im Bereich von -35°C bis +85°C und gegenüber Wasser und Treibstoffen aus. Die Qualität der Klebverbindungen beruht - wie Vergleichsversuche mit ähnlich zusammengesetzten Klebstoffen zeigen - auf der Auswahl der die Klebstoff-Komponenten bildenden Bestandteile und ihrer Kombination miteinander.

Zur näheren Erläuterung werden in den folgenden Beispielen einige bevorzugte Ausführungsformen des erfindungsgemäßen Klebstoffs und - zum Vergleich dazu - einige ähnlich zusammengesetzte Klebstoffe und im Anschluß daran die Prüfung der Klebstoffe durch Festigkeitsuntersuchungen an damit verklebten Polycarbonat-Prüfkörpern beschrieben.

Beispiel 1

1. Komponente: 78 Gewichts-% einer 60 %igen Lösung von Polymethylmethacrylat in Methylmethacrylat, 20 Gewichts-% 2,2-Bis-[4-(2-methacryloyloxyäthoxyphenyl)]-propan und 2 Gewichts-% Dibenzoylperoxid,
2. Komponente: 78 Gewichts-% einer 60 %igen Lösung von Polymethylmethacrylat in Methylmethacrylat,
20 Gewichts-% 2,2-Bis-[4-(2-methacryloyloxyäthoxyphenyl)]-propan und 2 Gewichts-% N,N-Dimethyl-p-toluidin.

Beispiel 2

1. Komponente: 88 Gewichts-% einer 60 %igen Lösung von Polymethylmethacrylat in Methylmethacrylat,
10 Gewichts-% 2,2-Bis-[4-(2-methacryloyloxyäthoxyphenyl)]-propan und 2 Gewichts-% Dibenzoylperoxid,
2. Komponente: 88 Gewichts-% einer 60 %igen Lösung von Polymethylmethacrylat in Methylmethacrylat,
10 Gewichts-% 2,2-Bis-[4-(2-methacryloyloxyäthoxyphenyl)]-propan und 2 Gewichts-% N,N-Dimethyl-p-toluidin.

Beispiel 3

1. Komponente: 78 Gewichts-% einer 55 %igen Lösung von Polymethylmethacrylat in Methylmethacrylat,
20 Gewichts-% 2,2-Bis-[4-(2-methacryloyloxyäthoxyphenyl)]-propan und 2 Gewichts-% Dibenzoylperoxid,
2. Komponente: 78 Gewichts-% einer 55 %igen Lösung von Polymethylmethacrylat in Methylmethacrylat,
20 Gewichts-% 2,2-Bis-[4-(2-methacryloyloxyäthoxyphenyl)]-propan und 2 Gewichts-% N,N-Dimethyl-p-toluidin.

Beispiel 4

1. Komponente: 46 Gewichts-% Polymethylmethacrylat, 31 Gewichts-% Methylmethacrylat, 20 Gewichts-%
2,2-Bis-[4-(2-methacryloyloxyäthoxyphenyl)]-propan und 3 Gewichts-% Dibenzoylperoxid,
2. Komponente: 46 Gewichts-% Polymethylmethacrylat, 31 Gewichts-% Methylmethacrylat, 20 Gewichts-%
2,2-Bis-[4-(2-methacryloyloxyäthoxyphenyl)]-propan und 3 Gewichts-% N,N-Dimethyl-p-toluidin.

Beispiel 5 (Vergleichsbeispiel)

1. Komponente: 77 Gewichts-% einer 60 %igen Lösung von Polymethylmethacrylat in Methylmethacrylat,
20 Gewichts-% Diurethandimethacrylat aus 2,2,4-Trimethylhexamethylendiisocyanat und 2-Hydroxyäthylmethacrylat und 3 Gewichts-% Dibenzoylperoxid,
2. Komponente: 77 Gewichts-% einer 60 %igen Lösung von Polymethylmethacrylat in Methylmethacrylat,
20 Gewichts-% Diurethandimethacrylat aus 2,2,4-Trimethylhexamethylendiisocyanat und 2-Hydroxyäthylmethacrylat und 3 Gewichts-% N,N-Dimethyl-p-toluidin.

Beispiel 6 (Vergleichsbeispiel)

1. Komponente: 77 Gewichts-% einer 60 %igen Lösung von Polymethylmethacrylat in Methylmethacrylat,
20 Gewichts-% Triäthylenglykoldimethacrylat und 3 Gewichts-% Dibenzoylperoxid,
2. Komponente: 77 Gewichts-% einer 60 %igen Lösung von Polymethylmethacrylat in Methylmethacrylat,
20 Gewichts-% Triäthylenglykoldimethacrylat und 3 Gewichts-% N,N-Dimethyl-p-toluidin.

Beispiel 7 (Vergleichsbeispiel)

1. Komponente: 77 Gewichts-% einer 60 %igen Lösung von Polymethylmethacrylat in Methylmethacrylat,
20 Gewichts-% Hydroxyäthylmethacrylat und 3 Gewichts-% Dibenzoylperoxid.
2. Komponente: 77 Gewichts-% einer 60 %igen Lösung von Polymethylmethacrylat in Methylmethacrylat,
20 Gewichts-% Hydroxyäthylmethacrylat und 3 Gewichts-% N,N-Dimethyl-p-toluidin.

Beständigkeitsprüfung der Klebstoffe

Die Beurteilung der in den Beispielen beschriebenen Klebstoffe erfolgt durch Festigkeitsuntersuchungen an aus damit verklebten Polycarbonat-Formteilen bestehenden Prüfkörpern. Dazu werden die Prüfkörper
A) einem Temperaturwechsel ("thermal cycling") ausgesetzt, indem sie 20 mal abwechselnd 30 Minuten lang in Kochendwasser und 1 Stunde lang bei -35°C im Kühlschrank,
B) 10 Stunden lang in Kochendwasser,

C) 5 Stunden lang bei 80°C in Benzin und

D) 5 Stunden lang bei 80°C in Dieselöl gehalten werden.

Anschließend werden die Prüfkörper belastet, bis es - bei stetiger Erhöhung der Last - zum Bruch kommt. Wie die in der folgenden Tabelle zusammengefaßten Ergebnisse der Untersuchungen zeigen, liegt der Bruch bei den unter Verwendung des erfindungsgemäßen Klebstoffs miteinander verbundenen Prüfkörpern nie in dem Klebstoffilm, sondern immer im Material. Keine der mit den Vergleichsklebstoffen hergestellten Klebverbindungen zeigt nach der Beständigkeitsprüfung ein ähnlich gutes Festigkeitsverhalten.

## Tabelle

### Beständigkeitsprüfung

| Beispiel | A | B | C | D |
|---|---|---|---|---|
| 1 | +++ | +++ | +++ | +++ |
| 2 | +++ | +++ | +++ | +++ |
| 3 | +++ | +++ | +++ | +++ |
| 4 | +++ | +++ | +++ | +++ |
| 5 | + | + | +++ | +++ |
| 6 | + | + | +++ | +++ |
| 7 | --- | --- | + | + |

+++ = Materialbruch

+ = Bruch im Klebstoffilm

– = Bruch zwischen Klebstoffilm und Materialoberfläche

--- = Ablösung des Klebstoffilms während der Prüfung

**Patentansprüche**

1. Klebstoff zum Verbinden von Formteilen aus Polycarbonat-Kunststoffen miteinander, dadurch gekennzeichnet, daß er ein kalthärtender zweikomponentiger Polymerisationsklebstoff ist und jede Komponente 25 - 35 Gewichts-% Methylmethacrylat, 10 - 25 Gewichts-% 2,2-Bis-[4-(2-methacryloyloxyäthoxyphenyl)]-propan und 40 - 50 Gewichts-% Polymethylmethacrylat und die erste Komponente zusätzlich 2 - 3 Gewichts-% Dibenzoylperoxid und die zweite Komponente zusätzlich 2 - 3 Gewichts-% N,N-Dimethyl-p-toluidin enthält.

2. Verwendung des Klebstoffs nach Anspruch 1 zur Herstellung von in dem Temperaturbereich von -35°C bis +85°C festen und gegenüber Wasser und Treibstoffen beständigen Klebverbindungen zwischen Formteilen aus Polycarbonat, glasfaserverstärktem Polycarbonat und/oder kohlefaserverstärktem Polycarbonat.

**Claims**

1. An adhesive for connecting shaped parts of polycarbonate plastics with each other, characterised in that it is a cold-hardening two-component polymerisation adhesive and each component contains 25 - 35 % by weight methyl methacrylate, 10 - 25 % by weight 2,2-bis-[4-(2-methacryloyloxyethoxyphenyl)]-propane and 40 -50 % by weight polymethylmethacrylate and the first component additionally contains 2 - 3 % by weight dibenzoylperoxide and the second component additionally contains 2 - 3 % by weight N,N-dimethyl-p-toluiduine.

2. The use of the adhesive according to Claim 1 for the production of adhesive connections between shaped parts of polycarbonate, polycarbonate reinforced with glass fibres and/or polycarbonate reinforced with carbon fibres, which adhesive connections are stable in the temperature range from -35°C to +85 °C and are resistant to water and fuels.

**Revendications**

1. Colle d'assemblage mutuel de pièces moulées en matières synthétiques à base de polycarbonate, caractérisée en ce qu'il s'agit d'une colle de polymérisation à deux composants, durcissant à froid, et en ce que chaque composant contient 25 à 35 % en poids de méthacrylate de méthyle, 10 à 25 % en poids de 2,2-bis-[4-(2-méthacryloyloxyéthoxyphényl)]-propane et 40 à 50 % en poids de poly(méthacrylate de méthyle), que le premier composant contient en outre 2 à 3 % en poids de peroxyde de dibenzoyle et le second composant contient en outre 2 à 3 % en poids de N,N-diméthyl-p-toluidine.

2. Utilisation de la colle selon la revendication 1 pour réaliser des assemblages collés, solides dans la plage de température de -35°C à +85°C et résistant à l'eau et aux combustibles, entre des pièces moulées en polycarbonate, polycarbonate renforcé aux fibres de verre et/ou polycarbonate renforcé aux fibres de carbone.